# FASCICULE DE BREVET EUROPEEN

(11) **EP 3 973 757 B1**
(45) Date de publication et mention de la délivrance du brevet: **17.07.2024**
(21) Numéro de dépôt: 21197029.8
(22) Date de dépôt: 16.09.2021
(51) Int. Cl.: A01B 63/16, A01B 73/00, B60B 35/10, A01B 73/04, A01D 34/00

(54) **MACHINE AGRICOLE TRAINÉE OU SEMI-PORTÉE AVEC UN DISPOSITIF D'ESSIEU RÉGLABLE**
GEZOGENE ODER AUFGESATTELTE LANDWIRTSCHAFTLICHE MASCHINE MIT EINER VERSTELLBAREN ACHSVORRICHTUNG
TRAILED OR SEMI-MOUNTED AGRICULTURAL MACHINE WITH AN ADJUSTABLE AXLE DEVICE

(30) Priorité: 29.09.2020 FR 2009860
(43) Date de publication de la demande: 30.03.2022
(73) Titulaire: Kuhn SAS, 67700 Saverne (FR)
(72) Inventeur: HALTER, Cédric, 67310 WASSELONNE (FR)
(74) Mandataire: Cabinet Nuss

(56) Documents cités:
- EP-A1- 3 707 983
- EP-A2- 2 168 786
- WO-A1-2015/166365
- WO-A1-2019/014466
- DE-A1- 4 407 695
- DE-U1- 9 102 354

## Description

La présente invention est relative au domaine du machinisme agricole, plus particulièrement des machines agricoles trainées ou semi-portées, et notamment celles nécessitant un écartement entre roues plus important durant leur utilisation que durant leur transport, et notamment supérieur à l'écartement autorisé par la règlementation de circulation sur la voie publique.

Dans ce contexte, l'invention a pour objet une machine agricole avec au moins un dispositif d'essieu avec un écartement entre roues variable et réglable.

Pour un certain nombre de machines agricoles qui sont supportées par les mêmes roues durant les phases de transport et les phases de travail, il est souhaitable, voire nécessaire, de disposer d'un écartement entre roues durant les phases de travail (et de manoeuvre) qui est supérieur à celui autorisé durant le transport sur routes.

Tel est, par exemple le cas pour les faucheuses-andaineuses trainées à deux unités, dans lesquelles l'écartement entre roues limite la largeur de l'andain central. Cet écartement entre roues est, lui, limité par la largeur admissible au transport. La largeur de chaque roue est quant à elle liée au poids des unités. Suivant les conditions (taille, densité, taux d'humidité... des plantes à couper), la quantité de produit regroupé entre les roues peut être telle que l'andain se trouve compacté, résultant de ce fait en un séchage inégal et en une moindre qualité de fourrage.

Pour surmonter ce problème, et rendre la voie réglable entre les phases de travail et de transport, la demanderesse a proposé pour le type de machine précité une structure d'essieu repliable, comme divulgué dans le document EP1366650. Toutefois, la construction résultante est complexe tant dans sa structure que dans son fonctionnement, et de plus relativement encombrante, notamment en longueur en position de transport.

D'autres solutions pour rendre réglable l'écartement entre roues de machines agricoles, qui mettent en oeuvre des constructions de châssis ou d'essieux télescopiques, ont aussi été proposées, comme par exemple par le document US5464243.

Dans ces dernières solutions, les surfaces de coulissement de la partie fixe et des parties mobiles ont des sections carrées pour empêcher la rotation des parties mobiles par rapport au châssis autour de l'axe de coulissement. Et, notamment lorsque l'écartement entre roues est maximal, elles sont soumises à des contraintes importantes, en particulier parallèles à l'avance, voire en torsion, risquant à la longue d'endommager et de rendre inutilisable ladite structure télescopique, en particulier la priver de sa faculté de réglage par coulissement.

Les documents EP 2 168 786 A2, WO 2019/014466 A1 et WO 2015/166365 A1 montrent d'autres machines agricoles avec un dispositif d'essieu comportant au moins une partie mobile.

Ainsi, le problème posé à la présente invention consiste essentiellement à proposer, dans le contexte précité, une solution permettant de réduire les contraintes induites dans les essieux de type télescopique et notamment celles liées à des efforts parallèles à la direction d'avance. En effet, ces contraintes entrainent une usure prématurée des parties coulissantes, résultant en une augmentation du jeu et aboutissant nécessairement, à plus ou moins longue échéance, à un dysfonctionnement de la structure télescopique, notamment un possible coincement/blocage des parties coulissantes.

A cet effet, l'invention a pour objet une machine agricole trainée ou semi-portée avec un châssis sur lequel est monté un dispositif d'essieu reliant deux roues audit châssis, ce dispositif d'essieu comportant au moins une partie mobile et une partie fixe de manière à pouvoir modifier l'écart entre roues, au moins une des roues étant solidaire d'une partie mobile qui est reliée de manière coulissante, selon un axe longitudinal, à la partie fixe solidaire du châssis, machine caractérisée en ce que la ou chaque partie mobile est en outre reliée mécaniquement au châssis par un lien articulé, d'une part, avec la partie mobile par une première articulation et, d'autre part, avec le châssis par une deuxième articulation. La ou chaque deuxième articulation est décalée selon la direction d'avance part rapport à la première articulation respective, quel que soit l'écartement entre les roues.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue schématique de dessus d'une machine agricole (par exemple du type faucheuse-andaineuse à deux unités de traitement) avec un dispositif d'essieu réglable selon un mode de réalisation de l'invention ;
[Fig. 2] est une vue partielle de dessous de l'ensemble de roulement faisant partie de la machine agricole de la figure 1, les roues étant dans une configuration resserrée ;
[Fig. 3A] est une vue similaire à celle de la figure 2, mais avec les roues dans une configuration écartée (et à une autre échelle) ;
[Fig. 3B] est une vue en perspective de dessus de l'objet représenté figure 3A ;
[Fig. 4] est une vue en élévation et en coupe selon un plan vertical comprenant les axes longitudinaux des parties mobiles d'un ensemble de roulement d'une machine agricole selon la figure 1 intégrant une variante de réalisation de dispositif d'essieu, les roues étant en configuration écartée comme dans la figure 3 ;
[Fig. 5] est une vue de dessous similaire à la figure 2 mais avec une coupe partielle du dispositif d'essieu selon un plan horizontal comprenant les axes longitudinaux des parties mobiles, et
[Fig. 6] est une vue de dessus d'une machine agricole similaire à celle de la figure 1, mais équipée d'un dispositif d'essieu réglable en accord avec un autre mode de réalisation de l'invention.

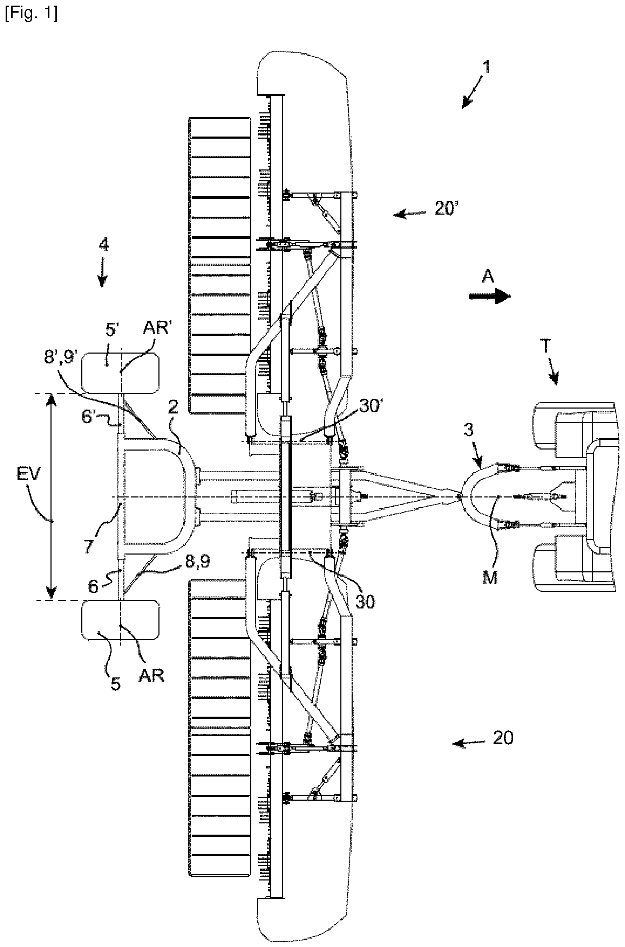

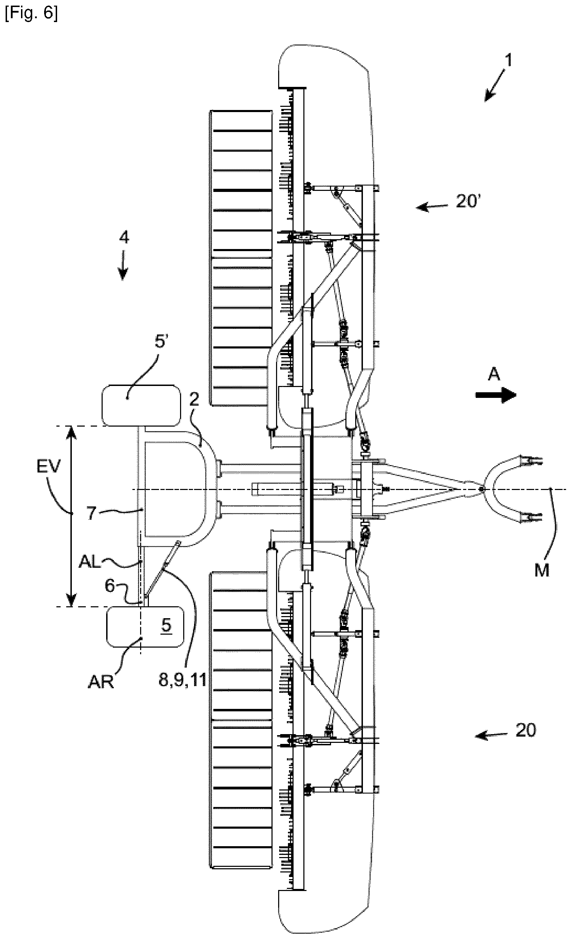

Les figures 1 et 6 illustrent une machine agricole (1) trainée ou semi-portée avec un châssis (2) sur lequel est monté un dispositif d'essieu (4) reliant deux roues (5, 5') audit châssis (2). Ce dispositif d'essieu (4) comporte au moins une partie mobile (6, 6') et une partie fixe (7) de manière à pouvoir modifier l'écartement (EV) entre les roues (5, 5'). Le dispositif d'essieu (4) est ainsi réglable en longueur transversalement, et préférentiellement perpendiculairement, à la direction d'avance (A). Au moins une des roues (5, 5') est solidaire de l'au moins une partie mobile (6, 6'). La ou chaque partie mobile (6, 6') est reliée de manière coulissante, selon un axe longitudinal (AL, AL') à la partie fixe (7) et cette partie fixe (7) est solidaire du châssis (2) ou fait éventuellement partie intégrante de ce dernier.

Conformément à l'invention, cette machine (1) est caractérisée en ce que la ou chaque partie mobile (6, 6') est en outre reliée mécaniquement au châssis (2) par un lien (8, 8') articulé, d'une part, avec la partie mobile (6, 6') par une première articulation (12,12') et, d'autre part, avec le châssis (2) par une deuxième articulation (13,13').

En prévoyant un ou des lien(s) (8, 8') qui établissent des liaisons rigides (de longueur réglable ou non) entre la ou chaque partie mobile (6, 6') et le châssis (2), l'invention permet de soulager le dispositif d'essieu (4) d'une grande partie des contraintes auxquelles il est soumis lors du déplacement de la machine, notamment de celles parallèles à la direction d'avance (A), et ce quel que soit l'écartement (EV) entre roues (5, 5'). On aboutit notamment à une diminution des contraintes dans les parties mobile(s) (6, 6') et fixe (7), notamment lors d'une accélération/décélération de la machine (1) ou lorsque cette dernière se déplace sur un sol (S) accidenté. Effectivement, le lien (8, 8') supporte au moins une partie des efforts longitudinaux à la direction d'avance (A), permettant avantageusement de diminuer les contraintes dans les parties mobile(s) (6, 6') et fixe (7).

Préférentiellement, le ou chaque lien (8, 8') relie directement la partie mobile (6, 6') concernée au châssis (2). On entend dans ce cas par « directement » que la partie mobile (6, 6') est reliée au lien (8, 8') indépendamment de la partie fixe (7) et sans passer par cette dernière.

Ainsi que représenté sur les figures 1 et 6, la machine (1) est conçue pour être trainée par un tracteur (T) dans la direction d'avance (A). A cet effet, elle est reliée au tracteur (T) par un dispositif d'attelage (3), préférentiellement situé à l'avant de la machine (1). Dans les modes de réalisation représentés sur les figures 1 et 6, sur le châssis (2) sont aussi montées deux unités de traitement (20, 20'). Ces dernières sont articulées avec le châssis (2) au niveau de liaisons pivot autorisant le pliage ou le relèvement desdites unités (20, 20') autour d'axes de pliage (30, 30') correspondants. Le châssis (2), respectivement la machine (1), est traversée par un plan médian (M) parallèle à la direction d'avance (A) et perpendiculaire aux plans des vues des figures 1 et 6. La deuxième unité de traitement (20') est située de l'autre côté du châssis (2), respectivement du plan médian (M), par rapport à la première unité (20). La deuxième unité de traitement (20') est sensiblement identique à la première unité de traitement (20). Elle est montée sur le châssis (2) symétriquement à la première unité de traitement (20) par rapport au plan médian (M). Le châssis (2), respectivement sa dimension longitudinale, s'étend préférentiellement parallèlement à la direction d'avance (A).

Dans le mode de réalisation préféré, le dispositif d'essieu (4) comporte une partie fixe (7) et deux parties mobiles (6, 6'). Chaque roue (5, 5') est solidaire d'une partie mobile (6, 6') respective. Chaque partie mobile (6, 6') est reliée de manière coulissante selon un axe longitudinal (AL, AL') respectif à la partie fixe (7) solidaire du châssis (2). Le dispositif d'essieu (4) est réglable en longueur par coulissement de la ou de chaque partie mobile (6, 6') selon l'axe longitudinal (AL, AL') correspondant par rapport à la partie fixe (7). Chaque partie mobile (6, 6') est reliée au châssis (2) par un lien (8, 8') respectif. Chaque lien (8, 8') est articulé d'une part avec la partie mobile (6, 6') respective par une première articulation (12,12'). Chaque lien (8, 8') est, d'autre part, articulé avec le châssis (2) par une deuxième articulation (13,13'). La ou chaque partie mobile (6, 6') est ainsi reliée mécaniquement au châssis (2) par un lien (8, 8') respectif, ce indépendamment de la partie fixe (7). Une telle réalisation permet de réaliser une machine (1) symétrique par rapport à un plan médian (M).

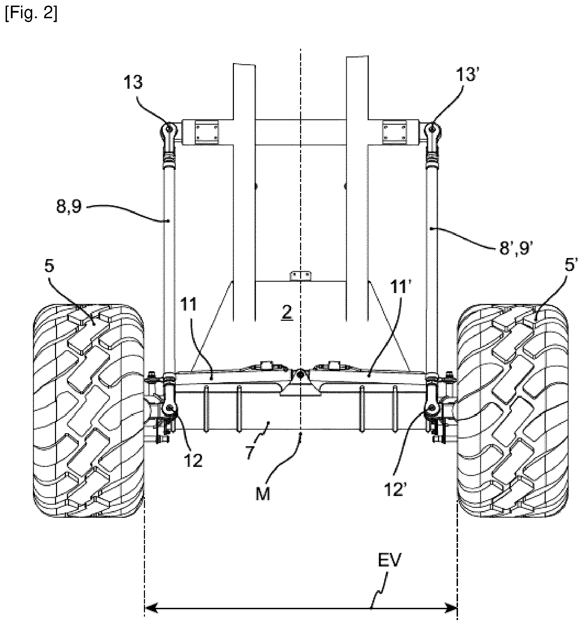

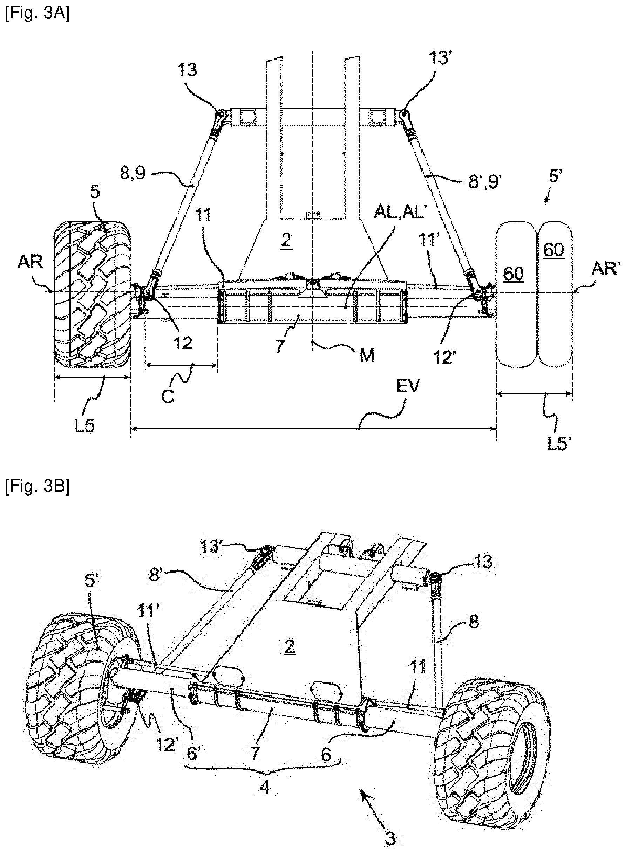

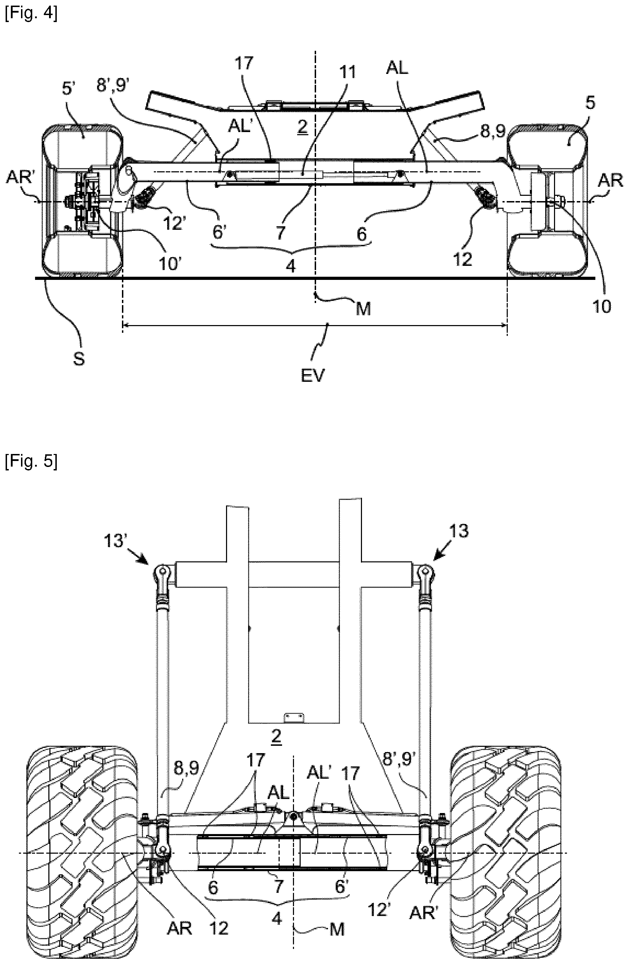

Ainsi, le dispositif d'essieu (4) est réglable en longueur et les roues (5, 5') peuvent présenter un écartement (EV) variable entre elles, et donc occuper au moins une configuration écartée et au moins une configuration resserrée ou rapprochée. Dans la configuration écartée (cf. figures 1 et 3), l'écartement (EV) entre roues (5, 5') est plus important qu'en configuration resserrée (cf. figures 2 et 5). Régler en longueur le dispositif d'essieu (4) revient à régler l'écartement (EV) entre roues (5, 5').

Il ressort de la figure 4 que chaque roue (5, 5') est solidaire de la partie mobile (6, 6') respective par l'intermédiaire d'un moyeu (10, 10'). Le moyeu (10, 10') est monté pivotant par rapport au châssis (2) selon un axe de rotation (AR, AR') respectif. Conséquemment, chaque roue (5, 5') est pivotante par rapport au châssis (2) selon l'axe de rotation (AR, AR') correspondant (elle tourne en rotation autour de cet axe lors du déplacement de la machine).

Tel qu'il ressort des figures 2 et 3, l'écartement (EV) entre roues (5, 5') est la distance séparant la première roue (5) (droite) de la deuxième roue (5') (gauche). Logiquement, cet écartement (EV) est mesuré parallèlement à un des axes de rotation (AR, AR'), et préférentiellement aux deux. L'écartement (EV) est minimal lorsque les roues (5, 5') sont en configuration resserrée (figure 2). L'écartement (EV) est maximal lorsque les roues (5, 5') sont en configuration écartée (figure 3).

Pour effectuer le réglage de l'écartement (EV) plusieurs solutions sont envisageables : actionnement manuel ou motorisé ; à commande manuelle, semi-automatique ou automatique (en cas de motorisation), à pilotage local ou délocalisé. Ainsi, la machine (1) peut comprendre au moins un actionneur (11, 11') d'écartement configuré pour faire coulisser la ou chaque partie mobile (6, 6') par rapport à la partie fixe (7) selon l'axe longitudinal (AL, AL') correspondant. Le ou chaque actionneur (11, 11') d'écartement est avantageusement réalisé par un vérin translatif.

Dans le mode de réalisation préféré représenté sur la figure 2, la machine (1) comprend deux actionneurs (11, 11') d'écartement. Le ou chaque actionneur (11, 11') d'écartement est associé à une roue (5, 5') respective. Le ou chaque actionneur (11, 11') d'écartement est solidarisé avec la partie mobile (6, 6') d'une part, et avec la partie fixe (7), d'autre part. Le ou chaque actionneur (11, 11') d'écartement pourrait aussi être solidarisé avec la partie mobile (6, 6') correspondante et avec le châssis (2).

Selon la variante de réalisation représentée sur la figure 4, un seul actionneur (11) peut être prévu et configuré pour faire coulisser les partie(s) mobile(s) (6, 6') par rapport à la partie fixe (7) selon le ou chaque axe longitudinal (AL, AL'). L'actionneur (11) est dans ce cas fixé d'une part à une partie mobile (6), et d'autre part à l'autre partie mobile (6'). L'actionneur (11) peut également être réalisé par un vérin à double tige dont le cylindre est solidarisé avec la partie fixe (7) et chacune des tiges fixées à une partie mobile (6, 6') respective. Afin d'économiser de la place, le ou les actionneur(s) (11, 11') peuvent être montés à l'intérieur de la partie fixe (7), comme illustré sur la figure 4 à titre d'exemple, et/ou à l'intérieur d'une ou des partie(s) mobile(s) (6, 6').

Grâce à au moins un actionneur (11, 11') d'écartement de type vérin hydraulique, l'écartement (EV) entre roues (5, 5') peut être réglé de manière discrète ou continue. Le ou les actionneur(s) (11, 11') d'écartement permet(tent) ainsi de régler l'écartement (EV) entre roues (5, 5'). Le ou chaque actionneur (11, 11') s'étend au moins sensiblement parallèlement à l'axe longitudinal (AL, AL') de la partie mobile (6, 6') concernée. Le ou chaque axe longitudinal (AL, AL') est transversal, et de préférence orthogonal, à la direction d'avance (A). Le ou chaque axe longitudinal (AL, AL') est en outre horizontal et/ou sensiblement parallèle à l'axe de rotation des roues arrière du tracteur (T).

La commande du ou des actionneurs (11, 11 `) d'écartement peut s'effectuer au niveau de la machine (1), mais s'effectue de préférence depuis le tracteur (T) auquel celle-ci est attelée, de sorte que le ou chaque actionneur (11, 11') d'écartement puisse être actionné lors de l'avance de la machine (1), évitant de détériorer le tapis végétal.

Afin de pouvoir suivre les variations d'écartement (EV) entres roues (5, 5') notamment, il est avantageusement prévu que la ou chaque première articulation (12,12') et la ou chaque deuxième articulation (13,13') soient du type pivot ou rotule. Dans le mode de réalisation préféré, les premières (12,12') et deuxièmes articulations (13,13') sont de type rotule afin de s'adapter au déplacement des roues (5, 5') selon l'axe longitudinal (AL, AL') correspondant, mais également à leur déplacement selon la direction d'avance (A).

Préférentiellement, la partie fixe (7) constitue la partie femelle du dispositif d'essieu (4). Les deux parties mobiles (6, 6') coulissent dans la partie fixe (7). Les constructions tubulaires des parties fixe (7) et mobiles (6, 6') peuvent présenter différentes formes.

Ainsi, des sections polygonales (carré, rectangulaire, ...) ou elliptiques peuvent être envisagées si aucune liberté de rotation entre la partie fixe (7) et les parties mobiles (6, 6') n'est recherchée. Une section elliptique permet cependant de mieux répartir les efforts et contraintes entre partie fixe (7) et parties mobiles (6, 6').

Au contraire, un pivotement au moins limité entre partie fixe (7) et partie mobile (6, 6') peut être recherché. Dans ce cas, il est prévu que les surfaces de coulissement de la partie fixe (7) et de la ou des parties mobiles (6, 6') soient des surfaces cylindriques à section circulaire. Ces surfaces cylindriques peuvent être circulaires de manière continue sur toute leur circonférence en section, ou seulement par segments angulaires discrets répartis sur leur circonférence. La ou chaque partie mobile (6, 6') peut ainsi pivoter par rapport à la partie fixe (7) autour de l'axe longitudinal (AL, AL') respectif, au moins dans la limite autorisée par le lien (8, 8') correspondant, notamment lors de la modification de l'écartement (EV).

Tel que représenté sur les figures 4 et 5, le contact entre les surfaces de coulissement respectivement de la partie fixe (7) et des parties mobiles (6, 6') peut être continu (réparti) ou discontinu (localisé). Ainsi, au moins un patin (17) - par exemple sous forme de bague- situé entre au moins une partie mobile (6, 6') et la partie fixe (7) peut être prévu, permettant un guidage linéaire du coulissement (cf. figure 4). Ainsi que représenté sur la figure 5, au moins deux patins (17) sont montés entre chaque partie mobile (6, 6') et la partie fixe (17), permettant de guider le coulissement avec plus de précision.

Dans un mode de réalisation préféré, le ou chaque patin (17) est une bague circulaire permettant de guider non seulement le coulissement, mais également le pivotement selon l'axe longitudinal (AL, AL') correspondant de la ou chaque partie mobile (6, 6') par rapport à la partie fixe (7). Afin de guider la ou chaque partie mobile (6, 6') également en configuration écartée, chaque patin (17) intérieur est monté proche de l'extrémité intérieure de ladite partie mobile (6, 6') en configuration écartée.

Conformément à une autre variante constructive, on peut également prévoir une partie fixe (7) avec une section extérieure carrée et avec une section intérieure circulaire dans laquelle coulissent (avec un guidage linéaire) et pivotent la ou chaque partie mobile (6, 6') à section extérieure circulaire.

Afin de pouvoir disposer d'une faculté de réglage suffisante pour répondre au besoin pratique, la course (C) de la ou chaque roue (5, 5') est avantageusement au moins égale à la largeur (L5, L5') de la roue (5, 5') respective. La course (C) de chaque roue (5, 5') correspond à la course de coulissement de la partie mobile (6, 6') associée. Cette course (C) d'une roue (5, 5') se mesure ainsi selon l'axe longitudinal (AL, AL') correspondant.

Bien entendu, chaque roue (5, 5') peut être réalisée d'un seul tenant ou être constituée par l'association de plusieurs roulettes ou galettes (60, 60) de diamètres égaux et assemblées ensemble. Dans ce cas, on considère que la largeur (L5, L5') d'une roue (5, 5') est le cumul des largeurs des différentes roulettes ou galettes (60) qui la constituent (voir figure 3A). La largeur (L5, L5') de chaque roue est liée au poids des unités de traitement (20, 20'). Une largeur (L5, L5') minimale est souvent nécessaire afin de ne pas exercer de pression trop importante sur le sol (S), évitant ainsi de tasser le sol (S) et/ou détériorer le tapis végétal. Chaque roue (5, 5') est guidée en rotation par le biais du moyeu (10, 10') associé.

Selon une caractéristique importante de l'invention, le ou chaque lien (8, 8') comprend un élément pour la transmission de contraintes entre ses première et deuxième articulations.

En accord avec un premier mode de réalisation simple, le ou chaque lien (8, 8') comprend une bielle (9, 9') rigide. De préférence, et ainsi que représenté sur la figure 2, chaque lien (8, 8') est une bielle (9, 9') rigide. On entend par là que chaque lien (8, 8') est apte à transmettre des efforts de traction et de compression entre le châssis (2) et la ou chaque partie mobile (6, 6'). La ou chaque bielle peut éventuellement être réglable en longueur (bielle télescopique par exemple), notamment par crans, tout en présentant une structure rigide une fois que l'écartement des roues souhaité est atteint. Il ressort de ce qui précède que le lien (8, 8') est apte à agir comme une bielle rigide, au moins lors du réglage de l'écartement (EV) entre roues (5, 5').

En accord avec un second mode de réalisation (voir figure 6), le ou chaque lien (8, 8') peut comprendre un vérin 11, notamment hydraulique ou électrique, permettant le cas échéant de soulever/abaisser le châssis (2) de la machine et/ou les outils de cette dernière, par exemple les unités de traitement (20, 20') d'une machine (1) du type faucheuse-andaineuse (cf. figure 1). Avec le ou chaque lien (8, 8') comprenant un vérin ou consistant en un vérin, il est en effet possible de soulever/abaisser le châssis (2) en faisant pivoter la ou chaque partie mobile (6, 6') autour de l'axe longitudinal (AL, AL') correspondant. Cela complexifie cependant la machine (1), et une synchronisation des vérins des liens (8, 8') et des actionneurs (11, 11') est nécessaire. Il est également possible que les vérins formant les liens (8, 8'), ou faisant partie de ces derniers, remplissent les fonctions des actionneurs de réglage de l'écartement des roues (5, 5'), en commandant le déplacement des parties mobiles (6, 6').

L'arrangement et la configuration des articulations (12, 12'), des moyeux (10, 10') et des parties mobiles (6, 6') peuvent être déclinés selon plusieurs variantes de réalisation, résultant en des constructions différentes, mais faisant toutes partie de l'invention.

Avantageusement, chacune des premières articulations (12,12') est située, radialement par rapport à la roue (5, 5') considérée, à distance de l'axe longitudinal (AL, AL') correspondant. De plus, chacune desdites premières articulations (12,12') est située à hauteur de l'extrémité libre de la partie mobile (6, 6') correspondante. Ainsi, un blocage du pivotement de la ou des partie(s) mobile(s) (6, 6') autour de l'axe longitudinal (AL, AL') respectif est obtenu en dehors des phases de réglage. De préférence, la ou chaque partie mobile (6, 6') est bloquée en pivotement autour de l'axe longitudinal (AL, AL') dans toutes les positions de la partie mobile (6, 6') longitudinalement à l'axe longitudinal (AL, AL') correspondant. Dans le cas où le lien (8, 8') serait réalisé par un câble ou une chaîne par exemple, une partie mobile (6, 6') ne serait en effet bloquée en pivotement autour de l'axe longitudinal (AL, AL') correspondant que dans un sens de rotation, à savoir uniquement dans la configuration d'extension maximale du lien (8, 8') correspondant.

Dans une optique de simplification de la machine (1), les axes de rotation (AR, AR') des roues (5, 5') d'un même dispositif d'essieu (4), sont alignés. Il ressort en effet des figures que le premier axe de rotation (AR) de la première roue (5) est aligné avec le deuxième axe de rotation (AR') de la deuxième roue (5'). De manière simple et pour ne pas déséquilibrer la machine (1), les axes de rotation (AR, AR') sont confondus. Le ou chaque axe de rotation (AR, AR') est évidemment horizontal. Ainsi qu'il ressort de la figure 4, de manière simple, chaque axe de rotation (AR, AR') est parallèle à l'axe longitudinal (AL, AL') correspondant. Préférentiellement, le ou chaque axe de rotation (AR, AR') est parallèle aux axes longitudinaux (AL, AL') quel que soit l'écartement (EV). On note que le dispositif d'essieu (4) pourrait être directeur, donc que le ou chaque axe de rotation (AR, AR') pourrait ne pas être constamment orthogonal à la direction d'avance (A). Préférentiellement, le dispositif d'essieu (4) n'est pas directeur. Préférentiellement, le ou chaque axe de rotation (AR, AR') est orthogonal à la direction d'avance (A) et au plan médian (M).

Préférentiellement, le ou chaque axe de rotation (AR, AR') est décalé radialement par rapport à l'axe longitudinal (AL, AL') de la partie mobile (6, 6') associée à la roue (5, 5') correspondante. De plus, la ou chaque première articulation (12, 12') est préférentiellement également décalée radialement par rapport à l'axe longitudinal (AL, AL') correspondant. Ainsi qu'il ressort des figures 2 et 3, lors du coulissement de la ou chaque partie mobile (6, 6') selon l'axe longitudinal (AL, AL') correspondant, le lien (8, 8'), respectivement la bielle (9, 9'), pivote autour de la deuxième articulation (13, 13') correspondante. Grâce à la distance radiale entre le ou chaque axe de rotation (AR, AR') et l'axe longitudinal (AL, AL') d'une part, et à la distance radiale entre la ou chaque première articulation (12, 12') et l'axe longitudinal (AL, AL') d'autre part, le pivotement du ou de chaque lien (8, 8') autour de la deuxième articulation (13, 13') impose un pivotement de la ou de chaque partie mobile (6, 6'), respectivement du ou de chaque axe de rotation (AR, AR'), autour de l'axe longitudinal (AL, AL') associé. Par conséquent, ce pivotement du lien (8, 8') autour de la deuxième articulation (13, 13') correspondante implique un déplacement de la roue (5, 5') associée selon la direction d'avance (A) permettant avantageusement de jouer sur la manoeuvrabilité de la machine (1) d'une part, et d'améliorer sa stabilité d'autre part. La distance radiale entre le ou chaque axe de rotation (AR, AR') et l'axe longitudinal (AL, AL') correspondant et la distance radiale entre la ou chaque première articulation (12,12') et l'axe longitudinal (AL, AL') correspondant permettent ainsi le réglage de l'écartement (EV) entre roues (5, 5').

Grâce au(x) lien(s) (8, 8'), le coulissement de la ou des partie(s) mobile(s) (6, 6') selon l'axe longitudinal (AL, AL') correspondant impose également un déplacement vertical de l'axe longitudinal (AL, AL') respectif, respectivement du châssis (2). De préférence, la ou chaque deuxième articulation (13, 13') est décalée en hauteur par rapport à la première articulation (12, 12') associée au moins dans une des configurations écartée ou rapprochée, permettant de compenser le déplacement vertical lié au coulissement de la ou des partie(s) mobile(s) (6, 6') selon l'axe longitudinal (AL, AL') correspondant.

De manière simple, la distance radiale entre le ou chaque axe de rotation (AR, AR') et l'axe longitudinal (AL, AL') correspondant est égale à la distance radiale entre la ou chaque première articulation (12,12') et l'axe longitudinal (AL, AL') correspondant.

Ainsi qu'il ressort des figures 3A et 5, la ou chaque deuxième articulation (13, 13') est décalée selon la direction d'avance (A) par rapport à la première articulation (12, 12') respective, quel que soit l'écartement (EV) entre roues (5, 5'). Une telle réalisation permet d'assurer que le ou chaque lien (8, 8') supporte au moins une partie des efforts longitudinaux à la direction d'avance (A), diminuant les contraintes dans la ou chaque partie mobile (6, 6') et la partie fixe (7) quel que soit l'écartement (EV) entre roues (5, 5'). Afin de réduire l'encombrement de la machine agricole (1) selon la direction d'avance (A), les deuxièmes articulations (13, 13') sont situées devant les premières articulations (12, 12') quel que soit l'écartement (EV) entre roues (5, 5').

Il ressort également des figures 3A et 5 que l'angle formé par le ou chaque lien (8, 8') et la direction d'avance (A) est de préférence inférieur à 60°, préférentiellement inférieur à 45°, et plus préférentiellement inférieur à 35° en configuration écartée. En effet, plus cet angle est fermé, plus la partie des efforts longitudinaux à la direction d'avance (A) supporté par le ou les liens (8, 8') sera importante, et plus les contraintes dans la ou chaque partie mobile (6, 6') seront réduites.

Le dispositif d'essieu (4) présente ainsi la forme générale d'un vilebrequin. La partie fixe (7) formerait la manivelle excentrée, et chaque axe de rotation (AR, AR') l'axe central du vilebrequin.

De préférence, le ou chaque axe de rotation (AR, AR') est situé en dessous de l'axe longitudinal (AL, AL') correspondant, au moins lorsque l'écartement (EV) entre roues (5, 5') est maximal. Une telle caractéristique permet d'éloigner la partie fixe (7) et/ou le châssis (2) du sol (S) tout en conservant un diamètre extérieur des roues (5, 5') standard, adapté pour l'utilisation de la machine (1). Un diamètre de roue (5, 5') standard, adapté pour l'utilisation d'une machine (1) agricole telle que décrite dans ce document est compris entre 1,2 et 1,3 mètre, et de préférence entre 1,1 et 1,4 mètre, et plus préférentiellement encore entre 0,9m et 1,5m. Ainsi, la distance entre le sol (S) et la partie fixe (7) est plus importante que celle entre le sol (S) et chaque partie mobile (6, 6'), permettant avantageusement de passer par-dessus un obstacle plus haut entre les roues (5, 5'). De préférence, l'axe longitudinal (AL) est situé au-dessus des axes de rotation (AR, AR') de moyeux (10,10') quel que soit l'écartement (EV) de sorte à avoir constamment une garde au sol importante au centre de la machine (1).

Selon une autre caractéristique constructive possible, les axes longitudinaux (AL, AL') des parties mobiles (6, 6') sont parallèles. De préférence, les axes longitudinaux (AL, AL') des parties mobiles (6, 6') sont mutuellement alignés, permettant de simplifier la machine (1). Notamment la partie fixe (7) est plus simple à la fabrication. Celle-ci est préférentiellement réalisée par un tube métallique.

Les parties mobiles (6, 6') sont préférentiellement dimensionner de telle manière que l'une puisse coulisser dans l'autre. Tel que représenté sur la figure 5, la partie mobile (6') gauche peut coulisser dans la partie mobile (6) droite. Ainsi, les courses (C) des parties mobiles (6, 6') se chevauchent lorsque l'écartement (EV) est minimal, de sorte que les roues (5, 5') peuvent être plus proches l'une de l'autre en écartement (EV) minimal.

En accord avec une caractéristique supplémentaire possible, la ou chaque première articulation (12, 12') est située à une distance plus importante de l'axe longitudinal (AL, AL') respectif que de l'axe de rotation (AR, AR') respectif. De préférence, chacune des premières articulations (12,12') est située sur l'axe de rotation (AR, AR') respectif. De cette manière, on diminue encore davantage les contraintes dans les parties mobile(s) (6, 6') et fixe (7), lors d'une accélération/décélération de la machine (1) ou lorsque cette dernière se déplace sur un sol (S) accidenté, grâce à un bras de levier plus important. La machine (1) pourrait aussi comprendre plusieurs dispositifs d'essieux selon l'invention.

La figure 6 illustre un autre mode de réalisation de l'invention dans lequel le dispositif d'essieu (4) ne comporte qu'une seule partie mobile (6) associée à l'une (5) des roues, l'autre roue étant montée sur la partie fixe (7). L'unique lien (8) peut comprendre une bielle (9) ajustable en longueur ou un vérin (11), comme actionneur de réglage de l'écartement (EV) reliant le cas échéant les parties fixe (7) et mobile (6). Les autres dispositions décrites ci-dessus en relation avec le lien (8), la partie mobile (6), les articulations (12 et 13) et l'axe de rotation (AR) peuvent aussi s'appliquer dans cet autre mode de réalisation.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection selon les revendications.

## Revendications

1. Machine agricole (1) trainée ou semi-portée avec un châssis (2) sur lequel est monté un dispositif d'essieu (4) reliant deux roues (5, 5') audit châssis (2), ce dispositif d'essieu (4) comportant au moins une partie mobile (6, 6') et une partie fixe (7) de manière à pouvoir modifier l'écartement entre les roues (5, 5'), au moins une des roues (5, 5') étant solidaire d'une partie mobile (6, 6') qui est reliée de manière coulissante selon un axe longitudinal (AL, AL') à la partie fixe (7) solidaire du châssis (2), la ou chaque partie mobile (6, 6') étant en outre reliée mécaniquement au châssis (2) par un lien (8, 8') respectif qui est articulé, d'une part, avec la partie mobile (6, 6') par une première articulation (12,12') et, d'autre part, avec le châssis (2) par une deuxième articulation (13,13'),
machine agricole (1) **caractérisée en ce que** la ou chaque deuxième articulation (13, 13') est décalée selon la direction d'avance (A) par rapport à la première articulation (12, 12') respective, quel que soit l'écartement (EV) entre roues (5, 5').

2. Machine agricole selon la revendication 1, **caractérisée en ce qu'**elle comprend au moins un actionneur (11, 11') d'écartement configuré pour faire coulisser la ou chaque partie mobile (6, 6') par rapport à la partie fixe (7) selon l'axe longitudinal (AL, AL') correspondant.

3. Machine agricole selon la revendication 1 ou 2, **caractérisée en ce que** le ou chaque lien (8, 8') comprend un élément pour la transmission de contraintes entre ses première et deuxième articulations, par exemple une bielle (9, 9') rigide ou un vérin (11, 11').

4. Machine agricole selon l'une des revendications 1 à 3, **caractérisée en ce que** la ou chaque première articulation (12,12') et la ou chaque deuxième articulation (13,13') sont du type pivot ou rotule.

5. Machine agricole selon l'une quelconque des revendications 1 à 4, **caractérisée en ce que** les surfaces de guidage en coulissement de la partie fixe (7) et de la ou de chaque partie mobile (6, 6') sont des surfaces cylindriques à section circulaire.

6. Machine agricole selon la revendication 1 à 5, **caractérisée en ce que** l'axe de rotation (AR, AR') de chaque roue (5, 5') est décalé radialement par rapport à l'axe longitudinal (AL, AL') de la partie mobile (6, 6') associée à cette roue (5, 5'), la ou chaque première articulation (12,12') étant préférentiellement également décalée radialement par rapport à l'axe longitudinal (AL, AL') de la partie mobile (6, 6') correspondante.

7. Machine agricole selon l'une quelconque des revendications 1 à 6, **caractérisée en ce que** les axes longitudinaux (AL, AL') des deux parties mobiles (6, 6') du dispositif d'essieu (4) réglable sont mutuellement alignés.

8. Machine agricole selon l'une quelconque des revendications 1 à 7, **caractérisée en ce que** la ou chaque première articulation (12, 12') est décalée radialement, d'une part, par rapport à l'axe longitudinal de coulissement (AL, AL') de la partie mobile (6, 6') correspondante, et, d'autre part, par rapport à l'axe de rotation (AR, AR') de la roue (5, 5') respectivement associée à cette partie mobile (6, 6'), la ou chaque première articulation concernée (12, 12') étant située à une distance plus importante dudit axe longitudinal de coulissement (AL, AL') concerné que dudit axe de rotation (AR, AR') concerné.

9. Machine agricole selon l'une quelconque des revendications 1 à 8, **caractérisée en ce que** la course (C) de coulissement d'une ou de chaque partie mobile (6, 6') est au moins égale à la largeur (L5, L5') de la roue (5, 5') respectivement associée à cette partie mobile (6, 6').

10. Machine agricole selon la revendication 2 ou l'une quelconque des revendications 3 à 9, pour autant qu'elles se rattachent à la revendication 2, **caractérisée en ce qu'**elle comprend deux actionneurs (11, 11') d'écartement, chacun étant solidarisé avec une partie mobile (6, 6'), d'une part, et avec la partie fixe (7), d'autre part.

11. Machine agricole selon l'une quelconque des revendications 1 à 10, **caractérisée en ce que** la ou chaque deuxième articulation (13, 13') est décalée en hauteur par rapport à la première articulation (12, 12') associée, au moins dans une des configurations écartée ou rapprochée.

12. Machine agricole selon l'une quelconque des revendications 1 à 11, **caractérisée en ce que** le ou chaque lien (8, 8') est configuré et agencé de telle manière que le coulissement de la ou des partie(s) mobile(s) (6, 6') selon l'axe longitudinal (AL, AL') correspondant, impose également un déplacement vertical de cet axe longitudinal (AL, AL'), respectivement du châssis (2).

13. Machine agricole selon l'une quelconque des revendications 1 à 12, **caractérisée en ce que** la distance radiale entre le ou chaque axe de rotation (AR, AR') et l'axe longitudinal (AL, AL') correspondant est égale à la distance radiale entre la ou chaque première articulation (12, 12') et l'axe longitudinal (AL, AL') correspondant.

14. Machine agricole selon l'une quelconque des revendications 1 à 13, **caractérisée en ce que** l'angle formé par le ou chaque lien (8, 8') et la direction d'avance (A) est de préférence inférieur à 60°, préférentiellement inférieur à 45°, et plus préférentiellement inférieur à 35° en configuration écartée.

## Patentansprüche

1. Gezogene oder aufgesattelte landwirtschaftliche Maschine (1) mit einem Rahmen (2), an dem eine Achsvorrichtung (4) angebracht ist, die zwei Räder (5, 5') mit dem Rahmen (2) verbindet, wobei diese Achsvorrichtung (4) mindestens einen beweglichen Teil (6, 6') und einen festen Teil (7) umfasst, so dass der Abstand zwischen den Rädern (5, 5') verändert werden kann, wobei mindestens eines der Räder (5, 5') fest mit einem beweglichen Teil (6, 6') verbunden ist, der gemäß einer Längsachse (AL, AL') verschiebbar mit dem festen Teil (7) verbunden ist, der fest mit dem Rahmen (2) verbunden ist, wobei der oder jeder bewegliche Teil (6, 6') ferner mechanisch mit dem Rahmen (2) über eine jeweilige Verbindung (8, 8') verbunden ist, die einerseits an dem beweglichen Teil (6, 6') über ein erstes Gelenk (12, 12') und andererseits an dem Rahmen (2) über ein zweites Gelenk (13, 13') angelenkt ist,
wobei die landwirtschaftliche Maschine (1) **dadurch gekennzeichnet ist, dass** das oder jedes zweite Gelenk (13, 13') gemäß der Vorschubrichtung (A) in Bezug auf das jeweilige erste Gelenk (12, 12') versetzt ist, unabhängig vom Abstand (EV) zwischen den Rädern (5, 5').

2. Landwirtschaftliche Maschine nach Anspruch 1, **dadurch gekennzeichnet, dass** sie mindestens ein Betätigungselement (11, 11') zur Beabstandung umfasst, das ausgestaltet ist, den oder jeden beweglichen Teil (6, 6') in Bezug auf den festen Teil (7) entlang der entsprechenden Längsachse (AL, AL') gleiten zu lassen.

3. Landwirtschaftliche Maschine nach Anspruch 1 oder 2, **dadurch gekennzeichnet, dass** die oder jede Verbindung (8, 8') ein Element zur Übertragung von Belastungen zwischen ihrem ersten und zweiten Gelenk umfasst, zum Beispiel eine starre Stange (9, 9') oder einen Zylinder (11, 11').

4. Landwirtschaftliche Maschine nach einem der Ansprüche 1 bis 3, **dadurch gekennzeichnet, dass** das oder jedes erste Gelenk (12, 12') und das oder jedes zweite Gelenk (13, 13') vom Typ Dreh- oder Kugelgelenk sind.

5. Landwirtschaftliche Maschine nach irgendeinem der Ansprüche 1 bis 4, **dadurch gekennzeichnet, dass** die Gleitführungsflächen des festen Teils (7) und des oder jedes beweglichen Teils (6, 6') zylindrische Flächen mit kreisförmigem Querschnitt sind.

6. Landwirtschaftliche Maschine nach irgendeinem der Ansprüche 1 bis 5, **dadurch gekennzeichnet, dass** die Drehachse (AR, AR') jedes Rads (5, 5') in Bezug auf die Längsachse (AL, AL') des beweglichen Teils (6, 6'), der diesem Rad (5, 5') zugehörig ist, radial versetzt ist, wobei das oder jedes erste Gelenk (12, 12') in Bezug auf die Längsachse (AL, AL') des entsprechenden beweglichen Teils (6, 6') vorzugsweise ebenfalls radial versetzt ist.

7. Landwirtschaftliche Maschine nach irgendeinem der Ansprüche 1 bis 6, **dadurch gekennzeichnet, dass** die Längsachsen (AL, AL') der beiden beweglichen Teile (6, 6') der einstellbaren Achsvorrichtung (4) zueinander ausgerichtet sind.

8. Landwirtschaftliche Maschine nach irgendeinem der Ansprüche 1 bis 7, **dadurch gekennzeichnet, dass** das oder jedes erste Gelenk (12, 12') radial versetzt ist, einerseits in Bezug auf die längs verlaufende Gleitverschiebungsachse (AL, AL') des entsprechenden beweglichen Teils (6, 6') und andererseits in Bezug auf die Drehachse (AR, AR') des Rads (5, 5'), das diesem beweglichen Teil (6, 6') jeweils zugehörig ist, wobei das oder jedes betreffende erste Gelenk (12, 12') in einem größeren Abstand von der betreffenden längs verlaufenden Gleitverschiebungsachse (AL, AL') als von der betreffenden Drehachse (AR, AR') angeordnet ist.

9. Landwirtschaftliche Maschine nach irgendeinem der Ansprüche 1 bis 8, **dadurch gekennzeichnet, dass** der Gleithub (C) eines oder jedes beweglichen Teils (6, 6') mindestens gleich der Breite (L5, L5') des Rads (5, 5') ist, das diesem beweglichen Teil (6, 6') jeweils zugehörig ist.

10. Landwirtschaftliche Maschine nach Anspruch 2 oder irgendeinem der Ansprüche 3 bis 9, soweit sie sich auf Anspruch 2 beziehen, **dadurch gekennzeichnet, dass** sie zwei Betätigungselemente (11, 11') zur Beabstandung umfasst, die jeweils fest mit einem beweglichen Teil (6, 6') einerseits und mit dem festen Teil (7) andererseits verbunden sind.

11. Landwirtschaftliche Maschine nach irgendeinem der Ansprüche 1 bis 10, **dadurch gekennzeichnet, dass** das oder jedes zweite Gelenk (13, 13') in Bezug auf das zugehörige erste Gelenk (12, 12') höhenversetzt ist, zumindest in einer der auseinander- oder zusammengezogenen Konfigurationen.

12. Landwirtschaftliche Maschine nach irgendeinem der Ansprüche 1 bis 11, **dadurch gekennzeichnet, dass** die oder jede Verbindung (8, 8') so ausgestaltet und angeordnet ist, dass das Gleiten des beweglichen Teils oder der beweglichen Teile (6, 6') gemäß der entsprechenden Längsachse (AL, AL') auch eine vertikale Verschiebung dieser Längsachse (AL, AL') bzw. des Rahmens (2) erzwingt.

13. Landwirtschaftliche Maschine nach irgendeinem der Ansprüche 1 bis 12, **dadurch gekennzeichnet, dass** der radiale Abstand zwischen der oder jeder Drehachse (AR, AR') und der entsprechenden Längsachse (AL, AL') gleich dem radialen Abstand zwischen dem oder jedem ersten Gelenk (12, 12') und der entsprechenden Längsachse (AL, AL') ist.

14. Landwirtschaftliche Maschine nach irgendeinem der Ansprüche 1 bis 13, **dadurch gekennzeichnet, dass** der Winkel zwischen der oder jeder Verbindung (8, 8') und der Vorschubrichtung (A) vorzugsweise kleiner ist als 60°, vorzugsweise weniger als 45°, und besonders bevorzugt weniger als 35° in der auseinandergezogenen Konfiguration beträgt.

## Claims

1. Towed or semi-mounted agricultural machine (1) with a chassis (2) on which an axle device (4) connecting two wheels (5, 5') to the said chassis (2) is mounted, this axle device (4) being provided with at least one movable part (6, 6') and one fixed part (7) in such a way that the spacing between the wheels (5, 5') can be modified, at least one of the wheels (5, 5') being rigidly fastened to a movable part (6, 6') that is connected slidingly along a longitudinal axis (AL, AL') to the fixed part (7), which is rigidly fastened to the chassis (2), the or each movable part (6, 6') being additionally connected mechanically to the chassis (2) by a respective link (8, 8'), which is articulated on the one hand with the movable part (6, 6') by a first articulation (12, 12) and on the other hand with the chassis (2) by a second articulation (13, 13')
agricultural machine (1) **characterized in that** the or each second articulation (13, 13') is offset along the direction of advance (A) relative to the respective first articulation (12, 12') regardless of the spacing (EV) between wheels (5, 5').

2. Agricultural machine according to claim 1, **characterized in that** it comprises at least one spacing actuator (11, 11') configured to make the or each movable part (6, 6') slide relative to the fixed part (7) along the corresponding longitudinal axis (AL, AL').

3. Agricultural machine according to claim 1 or 2, **characterized in that** the or each link (8, 8') comprises an element for the transmission of stresses between its first and second articulations, for example a rigid connecting rod (9, 9') or a jack (11, 11').

4. Agricultural machine according to one of claims 1 to 3, **characterized in that** the or each first articulation (12, 12') and the or each second articulation (13, 13') are of the pivot or ball-joint type.

5. Agricultural machine according to any one of claims 1 to 4, **characterized in that** the surfaces for slidingly guiding the fixed part (7) and the or each movable part (6, 6') are cylindrical surfaces of circular cross section.

6. Agricultural machine according to claims 1 to 5, **characterized in that** the axis of rotation (AR, AR') of each wheel (5, 5') is offset radially relative to the longitudinal axis (AL, AL') of the movable part (6, 6') associated with that wheel (5, 5'), the or each first articulation (12, 12') also being preferentially offset radially relative to the longitudinal axis (AL, AL') of the corresponding movable part (6, 6').

7. Agricultural machine according to any one of claims 1 to 6, **characterized in that** the longitudinal axes (AL, AL') of the two movable parts (6, 6') of the adjustable axle device (4) are mutually aligned.

8. Agricultural machine according to any one of claims 1 to 7, **characterized in that** the or each first articulation (12, 12') is offset radially on the one hand relative to the longitudinal sliding axis (AL, AL') of the corresponding movable part (6, 6') and on the other hand relative to the axis of rotation (AR, AR') of the wheel (5, 5') respectively associated with that movable part (6, 6'), the or each first articulation (12, 12') in question being situated at a larger distance from the said longitudinal sliding axis (AL, AL') in question than from the said axis of rotation (AR, AR') in question.

9. Agricultural machine according to any one of claims 1 to 8, **characterized in that** the sliding stroke (C) of one or of each movable part (6, 6') is at least equal to the width (L5, L5') of the wheel (5, 5') respectively associated with that movable part (6, 6').

10. Agricultural machine according to claim 2 or to any one of claims 3 to 9, to the extent that they relate to claim 2, **characterized in that** it comprises two spacing actuators (11, 11'), each being rigidly fastened to a movable part (6, 6') on the one hand and to the fixed part (7) on the other hand.

11. Agricultural machine according to any one of claims 1 to 10, **characterized in that** the or each second articulation (13, 13') is offset in height relative to the associated first articulation (12, 12'), at least in one of the extended or retracted configurations.

12. Agricultural machine according to any one of claims 1 to 11, **characterized in that** the or each link (8, 8') is configured and arranged in such a way that the sliding of the movable part(s) (6, 6') along the corresponding longitudinal axis (AL, AL') likewise imposes a vertical displacement of that longitudinal axis (AL, AL') or respectively of the chassis (2).

13. Agricultural machine according to any one of claims 1 to 12, **characterized in that** the radial distance between the or each axis of rotation (AR, AR') and the corresponding longitudinal axis (AL, AL') is equal to the radial distance between the or each first articulation (12, 12') and the corresponding longitudinal axis (AL, AL').

14. Agricultural machine according to any one of claims 1 to 13, **characterized in that** the angle formed by the or each link (8, 8') and the direction of advance (A) is preferably smaller than 60°, preferentially smaller than 45°, and more preferentially smaller than 35° in extended configuration.
